# EUROPÄISCHE PATENTSCHRIFT

(11) **EP 1 979 193 B1**
(45) Veröffentlichungstag und Bekanntmachung des Hinweises auf die Patenterteilung: **19.08.2009**
(21) Anmeldenummer: 07704325.5
(22) Anmeldetag: 02.02.2007
(51) Int. Cl.: B60R 13/02, F16B 37/04, F16B 37/08

(54) **BEFESTIGUNGSELEMENT FÜR FAHRZEUGTEILE**
FASTENING ELEMENT FOR VEHICLE PARTS
DISPOSITIF DE FIXATION DESTINÉ À DES PIÈCES DE VÉHICULES À MOTEUR

(30) Priorität: 03.02.2006 DE 202006001894 U
(43) Veröffentlichungstag der Anmeldung: 15.10.2008
(73) Patentinhaber: Carcoustics TechConsult GmbH, 51381 Leverkusen (DE)
(72) Erfinder: EBERLE, Diego, CH-9478 Azmoos (CH); WOLF, Andreas, A-6867 Schwarzenberg (AT); KORBMACHER, Uwe, 32427 Minden (DE); MANDJIK, Gerhard, A-6858 Schwarzach (AT)
(74) Vertreter: Bauer Vorberg Kayser Patentanwälte
(86) Internationale Anmeldenummer: PCT/EP2007/051038
(87) Internationale Veröffentlichungsnummer: WO 2007/088202

(56) Entgegenhaltungen:
- EP-A- 1 101 957
- EP-A2- 1 045 153
- DE-C1- 10 138 354
- US-A- 4 890 966

## Beschreibung

Die Erfindung betrifft ein Befestigungselement für Fahrzeugteile, insbesondere zur Befestigung eines Hitzeschildes an einem bolzenförmigen Befestigungsmittel einer Karosserie, mit einer Krallenscheibe und einer an Krallen der Krallenscheibe gehaltenen Federscheibe, wobei die Krallenscheibe eine Öffnung aufweist und die Federscheibe mit dem bolzenförmigen Befestigungsmittel verrastbar ist. Ferner betrifft die Erfindung ein mit einem solchen Befestigungselement versehenes Fahrzeugteil, insbesondere Hitzeschild.

Ein Befestigungselement der genannten Art ist aus der DE 101 38 354 C1 bekannt und umfasst eine Federscheibe, welche in einer als Oberteil ausgeführten Krallenscheibe fixiert ist, sowie ein als Unterteil ausgeführtes Gegenstück zur Krallenscheibe. Zum Anbringen des bekannten Befestigungselements an einer zu befestigenden plattenförmigen Verkleidung, wird zunächst die Krallenscheibe auf eine Bohrung der Verkleidung gesetzt. Anschließend wird das Unterteil von der anderen Seite der Verkleidung mit der Krallenscheibe verrastet. Dazu weist das Unterteil eine Mehrzahl von mit Rastnasen versehenen Zungen auf, die durch die Bohrung geführt und auf der Gegenseite der Verkleidung mit einer dafür ausgebildeten Außenstufe der Krallenscheibe verrastet werden. Anschließend wird noch die Federscheibe in die Krallenscheibe eingesetzt, bevor die Verkleidung mittels des Befestigungselements an einem Gewindebolzen einer Karosserie angebracht wird.

Unbefriedigend an derartigen Befestigungselementen sind der relativ hohe Aufwand für die Montage des Befestigungselements an der Verkleidung bzw. dem Fahrzeugteil und die hohen Herstellungskosten für die einzelnen Bauteile des Befestigungselements. Es müssen hier stets mehrere Bauteile parallel zueinander mit hoher Präzision hergestellt werden, um Fehler bei der späteren Montage möglichst ausschließen zu können. Im Zusammenhang mit der Montage des Befestigungselements an einem Fahrzeugteil besteht noch weiteres Verbesserungspotential hinsichtlich der hierfür benötigten Taktzeiten. Schon eine geringe Reduzierung der Taktzeiten führt zu einer erheblichen Verbesserung der Wirtschaftlichkeit, wenn die Anzahl der montierten Befestigungselemente bzw. die Anzahl von mit Befestigungselementen versehenen Fahrzeugteilen, insbesondere Verkleidungen, insgesamt deutlich erhöht werden kann. Die EP 1 101 957 A2 offenbart ein Befestigungs element nach den Oberbegriff des Anspruchs 1. Der vorliegenden Erfindung liegt daher die Aufgabe zugrunde, ein Befestigungselement der eingangs genannten Art zu schaffen, das schneller montiert und kostengünstiger hergestellt werden kann als dies bei herkömmlichen Befestigungselementen dieser Art der Fall ist.

Diese Aufgabe wird durch ein Befestigungselement mit den Merkmalen des Anspruchs 1 gelöst.

Durch das wenigstens eine Klippelement ist es möglich, die Krallenscheibe einfach auf ein zu befestigendes Fahrzeugteil, insbesondere Hitzeschild aufzusetzen. Dazu muss lediglich das wenigstens eine Klippelement durch die Bohrung geführt werden. Ohne zusätzliche Mittel verrastet die Krallenscheibe und damit das Befestigungselement als solches mit dem Fahrzeugteil, denn das Fahrzeugteil gelangt infolge des Durchsteckens des wenigstens einen Klippelements in den Bereich der mindestens einen Hinterschneidung. Dort ist das Fahrzeugteil nach beiden Seiten gegenüber einem unbeabsichtigten Lösen der Rastverbindung gehalten.

Mit anderen Worten kann das Befestigungselement von lediglich einer Seite mit dem zu befestigenden Fahrzeugteil, z.B. einem Hitzeschild oder einer schallisolierenden Verkleidung verbunden werden. Ein umständliches Verbinden zweier Teile von einander gegenüberliegenden Seiten des zu befestigenden Fahrzeugteils ist nicht mehr erforderlich. Es reicht aus, das Befestigungselement von einer Seite in eine geeignete Bohrung des Fahrzeugteils hinein zu drücken. Dabei werden das wenigstens eine Klippelement und/oder das Fahrzeugteil zumindest partiell elastisch deformiert. Nachdem das Befestigungselement durch die Öffnung hindurch gesteckt ist, geht diese Deformation zumindest teilweise zurück und gelangt das Fahrzeugteil abschnittsweise in die Hinterschneidung. Deshalb kann man auch von "Einklippsen" des Befestigungselements sprechen.

Das Befestigungselement ist anschließend unverlierbar mit dem Fahrzeugteil verbunden, da die Verbindung nur durch eine erneute Deformation gelöst werden kann. Hierzu sind allerdings Kräfte erforderlich, die deutlich größer sind als die Kräfte, welche beim Anbringen des Fahrzeugteils an der Karosserie eines Kraftfahrzeugs auf das Befestigungselement einwirken.

Dies schließt jedoch nicht aus, däss das Befestigungselement durch gezieltes Aufbringen einer Kraft, die der beim Verbinden des Befestigungselements mit dem Fahrzeugteil entgegengerichtet ist, wieder separiert und anschließend wiederverwendet oder durch eine andere Befestigungsvorrichtung ersetzt werden kann. Letztlich wird durch die Erfindung auch eine deutlich höhere Flexibilität hinsichtlich einer eventuellen Demontage des Befestigungselements erzielt.

Vorteilhaft ist es bei der Erfindung weiter, dass nun nur noch zwei Bauteile benötigt werden, um ein mit einem Bolzen, insbesondere Gewindebolzen verrastbares Befestigungselement zu bilden. Da insgesamt weniger Bauteile gefertigt werden müssen und dabei auch weniger Material benötigt wird, können Kosten in erheblichem Umfang eingespart werden. Wie zuvor bereits dargelegt worden ist, werden diese Einsparungen auch nicht durch einen höheren Montageaufwand zunichte gemacht. Gerade das Gegenteil ist der Fall.

Die Erfindung ist nicht auf Befestigungselemente für spezielle Fahrzeugteile, insbesondere Verkleidungen beschränkt. Gleichwohl sind erfindungsgemäße Befestigungselemente insbesondere für die Befestigung von Hitzeschilden und Schallabsorbern vorteilhaft, da diese häufig dadurch montiert werden, dass Befestigungselemente der eingangs genannten Art auf Bolzen, insbesondere Gewindebolzen oder Rillen aufweisende Profilbolzen geschoben wird. Folglich handelt es sich bei dem Befestigungsmittel auch vorzugsweise um einen derartigen Bolzen, wenn gleich auch andere aus dem Stand der Technik bekannte und für die entsprechende Verwendung geeignete Befestigungsmittel denkbar sind.

Des Weiteren ist das Befestigungselement zum Anbringen einer Verkleidung an einem Unterboden eines Kraftfahrzeugs besonders bevorzugt. Insbesondere können dort in der Nähe von heißen Teilen des Auspuffs Hitzeschilde angeordnet werden, um den Unterboden oder angrenzende Bauteile vor Hitze zu schützen. Ferner können dort auch angrenzend zu Schallquellen als Schallabsorber ausgebildete Verkleidungen mittels eines oder mehrerer erfindungsgemäßer Befestigungselemente angebracht werden, um den Geräuschpegel im Innenraums des Kraftfahrzeugs zu verringern.

Bei einer besonders bevorzugten Ausgestaltung des Befestigungselements ist das wenigstens eine Klippelement zwischen Hinterschneidung und freiem Ende als Distanzstück verlängert. Auf diese weise wird eine Mindestdistanz zwischen dem Fahrzeugteil und der Karosserie sichergestellt. Dies ist beispielsweise dann von Vorteil, wenn metallische Verkleidungen, insbesondere Hitzeschilde an eine ebenfalls metallische Karosserie angebracht werden. Insbesondere bei der Verwendung unterschiedlicher Metalle wird dadurch die Gefahr von Kontaktkorrosion sicher ausgeschlossen.

Eine bevorzugte Ausgestaltung des erfindungsgemäßen Befestigungselements sieht vor, dass das freie Ende des wenigstens einen Klippelements gegenüber einem zur Anlage an dem Fahrzeugteil oder Hitzeschild bestimmten Abschnitt der Krallenscheibe um eine Länge vorsteht, die mindestens das Zweifache der Dicke des verrasteten Randbereichs des Fahrzeugteils oder Hitzeschildes beträgt.

In weiter bevorzugter Ausgestaltung weist das Befestigungselement am freien Ende des wenigstens einen Klippelements eine vorzugsweise ringförmige Anlagefläche zur Anlage an der Karosserie auf. Diese Anlagefläche gewährleistet, dass die gegebenenfalls gewünschte Distanz zwischen Karosserie und dem daran montierten Fahrzeugteil sicher eingehalten wird. Wäre das Befestigungselement dagegen nur punktuell an der Karosserie abgestützt, könnte die Abstützung verrutschen oder sich verbiegen, wodurch sich die Distanz zwischen dem Fahrzeugteil und der Karosserie unzulässig verringern könnte.

Damit die Montage des Befestigungselements ohne erhöhten Aufwand erfolgen kann, bietet es sich an, dass die Krallenscheibe außerhalb der Öffnung eine flächige Anlage zur Anlage an dem zu befestigenden Fahrzeugteil aufweist und das wenigstens eine Klippelement senkrecht zu der flächigen Anlage nach außen absteht. Dann können beispielsweise zwei voneinander getrennte Seiten des Befestigungselements geschaffen werden, wobei eine für die Aufnahme der Federscheibe und die andere für das Einführen in die und Einklippsen in der Öffnung ausgebildet wird. Diese beiden Seiten sind dann letztlich durch die flächige Anlage voneinander getrennt. Auch kann dann keiner der Bereiche des Befestigungselements eine Behinderung hinsichtlich der Funktionalität des jeweils anderen Bereichs hervorrufen.

Wenn das erfindungsgemäße Befestigungselement mehrere Klippelemente aufweist, dann ist es besonders zweckmäßig, wenn die Klippelemente gleichmäßig über den Umfangs der Öffnung verteilt vorgesehen sind. Auf diese Weise können die auf das Befestigungselement übertragenen Kräfte gleichmäßig - ohne Belastungsspitzen - auf das Fahrzeugteil übertragen werden und umgekehrt.

Um die Kräfte zu erhöhen, die erforderlich sind, um das Befestigungselement wieder von dem Fahrzeugteil zu trennen, kann das wenigstens eine Klippelement als im Wesentlichen geschlossener Kragen ausgebildet sein. Das bedeutet, dass der Kragen im Wesentlichen eine geschlossene Form ähnlich einem Rohrstück oder dergleichen aufweist.

Bei dem Kragen kann es so sein, dass dieser einen Schlitz oder auch mehrere Schlitze aufweist, deren Breite beim Durchstecken des Befestigungselements aufgrund der Deformation des Kragens kleiner wird. Sind mehrere Schlitze vorgesehen, sind diese wiederum vorzugsweise gleichmäßig über den Umfang des Kragens verteilt. Der Kragen kann aber auch vollständig geschlossen ausgestaltet sein, was unter anderem den Vorteil mit sich bringt, dass der Kragen dann bevorzugte Eigenschaften hinsichtlich seiner Funktion als Distanzstück aufweist. Durch die geschlossene Form, bei der es sich vorzugsweise um eine zylindrische Form handelt, kann der Kragen große Kräfte aufnehmen, ohne dass die Gefahr einer Verformung und daran angeschlossen einer Unterschreitung des Mindestabstands zwischen dem Fahrzeugteil und der Karosserie besteht.

Dabei ist es grundsätzlich von Vorteil, insbesondere bei einer Karosserie mit unebener Oberfläche, wenn die Anlagefläche am freien Ende des Kragens möglichst groß ist. So ist die Gefahr eines Verrutschens oder einer verformung vermindert. Dies gilt unabhängig davon, ob der Kragen einen Schlitz oder mehrere Schlitze aufweist oder nicht. Auch bei lediglich einzelnen Klippelementen kann eine größere Anlagefläche am freien Ende derselben vorteilhaft sein.

Bei einer weiter bevorzugten Ausgestaltung des Befestigungselements ist die Hinterschneidung vollständig umlaufend am Kragen vorgesehen. Derartige Kragen sind einfach herzustellen und führen zu einer gleichmäßigen Krafteinwirkung beim Verbinden auf das Fahrzeugteil bzw. das Befestigungselement sowie zu einer gleichmäßigen Kraftverteilung bei der Einwirkung äußerer Kräfte auf die mit der Karosserie verbundenen Bauteile. Ungeachtet dessen kann es aber im Einzelfall vorteilhaft sein, wenn die Hinterschneidung partiell unterbrochen ist. Unter Umständen kann dann auch der Rand der Bohrung des zu befestigenden Fahrzeugteils mit mit den Hinterschneidungen korrespondierenden Vorsprüngen oder Aussparungen versehen werden. Hierdurch ist es etwa möglich, ein Verdrehen von Befestigungselement und befestigtem Fahrzeugteil zu verhindern.

Für das Einfügen (Verrasten) des Kragens ist bevorzugt, wenn der Kragen wenigstens eine die Hinterschneidung bildende Wulst aufweist. Selbstverständlich kann an einem Kragen alternativ oder zusätzlich auch eine Einschnürung desselben vorgenommen werden, um eine Hinterschneidung auszubilden. In den meisten Fällen ist es jedoch bevorzugt, wenn eine Wulst ausgebildet ist. Diese wird vorzugsweise durch eine lokale Aufweitung des Umfangs des Kragens erzeugt.

Insbesondere im Zusammenhang mit der Verwendung des Fahrzeugteils als Hitzeschild bietet es sich an, wenn die Krallenscheibe oder gar das gesamte Befestigungselement aus Aluminium oder einem Aluminiummaterial gebildet ist. Da Aluminium ein vergleichsweise teures Material ist, kommen die Vorteile hinsichtlich der günstigen Herstellungskosten des erfindungsgemäßen Befestigungselements besonders zum Tragen.

Gegenstand der vorliegenden Anmeldung ist ferner ein Fahrzeugteil, insbesondere Hitzeschild, mit einer Bohrung und einem in der Bohrung verrasteten Befestigungselement nach einem der Ansprüche 1 bis 9.

Nachfolgend wird die Erfindung anhand einer ein Ausführungsbeispiel darstellenden Zeichnung näher erläutert. In der Zeichnung zeigen
- Fig. 1: ein Befestigungselement mit einem Abschnitt eines zu befestigenden Fahrzeugteils in Schnitt- darstellung entlang der Linie A - A der Fig. 2;
- Fig. 2: das Befestigungselement aus Fig. 1 in Drauf- sicht; und
- Fig. 3: das Befestigungselement der Fig. 1 in Verbindung mit einem an einer Karosserie angebrachten Gewindebolzen.

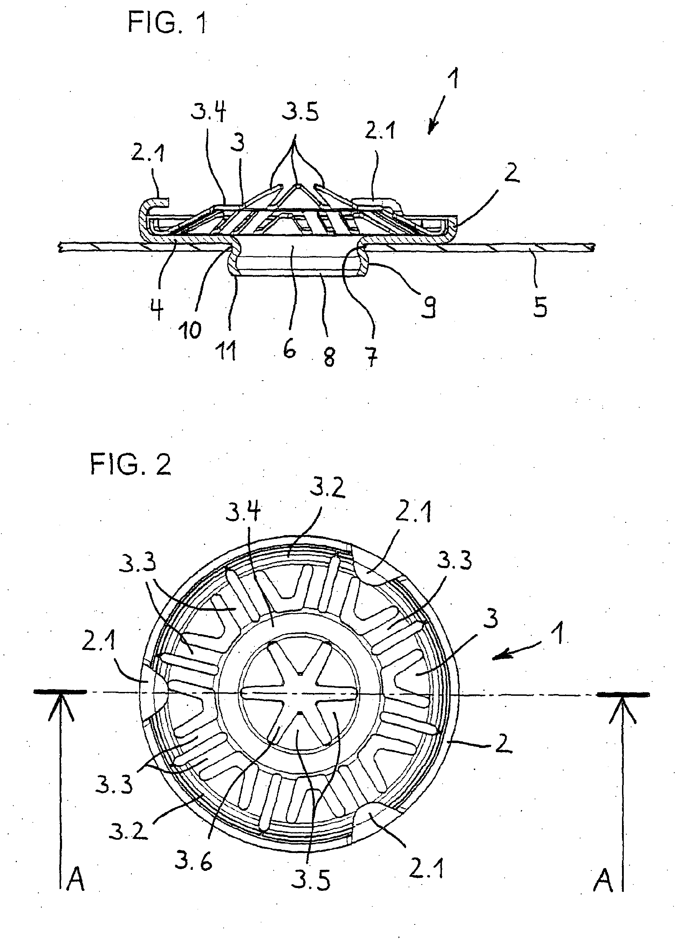

In Fig. 1 ist ein Befestigungselement 1 dargestellt, das aus zwei Teilen, nämlich einer Krallenscheibe 2. und einer Federscheibe 3 besteht. Die Krallenscheibe 2 weist eine scheibenförmige, flächige Anlage 4 auf, die an einem zu befestigenden Fahrzeugteil 5, beispielsweise einer schallabsorbierenden Verkleidung oder einem Hitzeschild anliegt. Bei dem mit 5 bezeichneten Bauteil kann es sich insbesondere um ein Trägerblech eines mehrere Metallfolien aufweisenden Hitzeschildes handeln.

Die Krallenscheibe 2 weist eine zentrale Öffnung 6 auf, welche mit einem Durchbruch oder einer Bohrung 7 in dem Fahrzeugteil 5 im Wesentlichen in Deckung ist. Oberhalb der flächigen Anlage 4 der Krallenscheibe befindet sich eine Aufnahme zum Einsetzen der Federscheibe 3, die durch drei gleichmäßig über den Umfang der Krallenscheibe 2 angeordnete Biegelaschen 2.1 gehalten wird. Dies ist insbesondere aus Fig. 2 ersichtlich.

Die Federscheibe 3 weist radial auswärts gerichtete Auflagelappen 3.2 auf, welche über Federschenkel 3.3 mit einem inneren, umlaufenden Ringteil 3.4 verbunden sind. An dem Ringteil 3.4 sind radial nach innen gerichtete Rastnasen 3.5 angeformt, die zwischen sich eine etwa sternförmig ausgebildete Ausnehmung 3.6 definieren. Die Rastnasen 3.5 sind ebenso wie die Federschenkel 3.3 federnd ausgebildet. Selbstverständlich ist die Ausbildung der Federscheibe 3 nicht auf die dargestellte Form beschränkt. Die Federscheibe 3 kann auch anders geformte Rastnasen aufweisen, die gegebenenfalls keine sternförmige Ausnehmung 3.6 definieren, sondern beispielsweise eine ovale oder eine elliptische Ausnehmung. Ebenso müssen nicht mehrere gleichmäßig am Umfang verteilt angeordnete Rastnasen 3.5 vorhanden sein, sondern es kann auch ausreichen, zum Beispiel nur zwei einander gegenüberliegende Rastnasen vorzusehen, die zwischen sich eine entsprechende Ausnehmung definieren.

Bevor die Federscheibe 3 in die Aufnahme der Krallenscheibe 2 eingesetzt ist, stehen die Biegelaschen (Krallen) 2.1 zunächst im Wesentlichen senkrecht von der flächigen Anlage 4 ab. Nachdem die Federscheibe 3 eingesetzt ist, werden die Krallen 2.1 in Richtung der Öffnung 6 gebogen, so dass die Federscheibe 3 unverlierbar mit der Krallenscheibe 2 verbunden ist. Die Krallenscheibe 2, insbesondere die Position der umgebogenen Biegelaschen 2.1 ist so bemessen, dass die eingesetzte Federscheibe 3 in der Krallenscheibe 2 drehbar gehalten ist.

Die Öffnung 6 der Krallenscheibe 2 ist von einem Kragen 8 umfasst, der senkrecht zu dem scheibenförmigen Abschnitt 4 nach außen absteht und weg von der Federscheibe 3 weist. Der Kragen 8 ist als Klippelement ausgeführt. Er weist einen Wulst 9 sowie eine Hinterschneidung 10 auf. Bei dem hier bereits montiert dargestellten Befestigungselement 1 erstreckt sich der Kragen 8 vollständig durch den Durchbruch bzw. die Bohrung 7, während die übrigen Teile der Krallenscheibe 2, also die flächige Anlage 4 und die Aufnahme für die Federscheibe 3, auf der gegenüberliegenden Seite des Fahrzeugteils 5 angeordnet sind.

Das Befestigungselement 1 ist im Wesentlichen rotationssymmetrisch ausgebildet. Dementsprechend ist der Durchbruch 7 in dem Fahrzeugteil 5 kreisförmig und der Kragen 8 der Krallenscheibe 2 unter Vernachlässigung des Wulstes 9 und der sich diesem anschließenden Hinterschneidung 10 zylindrisch. Diese Ausgestaltung ist bevorzugt, jedoch nicht zwingend erforderlich.

Der Wulst 9 des Kragens 8 ist dadurch gebildet, dass der Durchmesser des Kragens 8 an einer Stelle vergrößert worden ist. Dies geschieht vorzugsweise durch eine plastische Verformung des Kragens 8 von innen heraus. Angrenzend zu dem Wulst 9 auf der der Federscheibe 3 zugewandten Seite ergibt sich durch die Aufweitung des Kragens 8 die Hinterschneidung.10.

Die Distanz zwischen der flächigen Anlage 4 und dem Wulst 9 ist so gewählt, dass sie in etwa der Dicke des Fahrzeugteils 5 entspricht. Die Distanz kann natürlich auch etwas kleiner als die Dicke des Fahrzeugteils 5 gewählt werden.

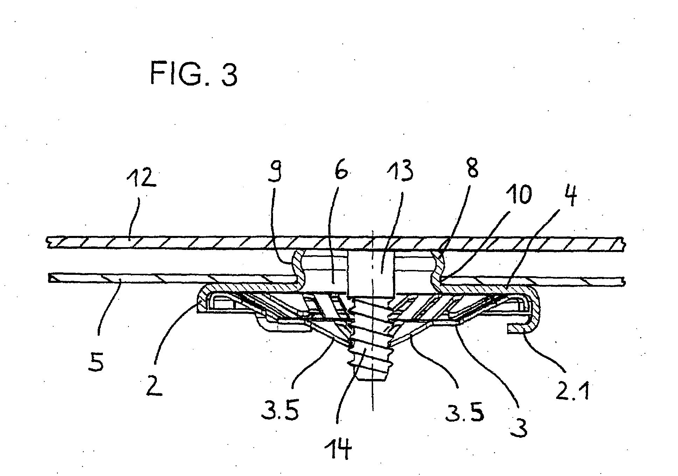

Fig. 1 zeigt weiterhin, dass der Kragen 8 länger ausgebildet ist, als es für das eigentliche Einklippsen des Befestigungselements 1 in den Durchbruch 7 des Fahrzeugteils 5 erforderlich wäre. Durch diesen Überstand, der die Funktion eines Distanzstücks hat, wird sichergestellt, dass das Fahrzeugteil 5 im montieren Zustand mit Abstand zu der es tragenden Karosserie angeordnet ist (vgl. Fig. 3). Am freien Ende des Kragens 8 ist eine Anlagefläche 11 zur Anlage an einem Karosserieblech 12 vorhanden.

In Fig. 3 ist das Befestigungselement 1 in Verbindung mit einem an einem Karosserieblech 12 angebrachten Gewindebolzen (Befestigungsdorn) 13 dargestellt. Fig. 3 zeigt, dass die Befestigung des Gewindes 14 in der Federscheibe 3 stets unter Vorspannung erfolgt, indem die Federschenkel 3.3 und die Rastnasen 3.5 eine Zugwirkung auf den Bolzen 13 und damit auf den Befestigungsbereich des Karosserie 12 ausüben; welcher dadurch unter entsprechender Federspannung mit dem Fahrzeugteil 5 verbunden ist.

Die Ausführung der Erfindung ist nicht auf das vorstehend beschriebene Ausführungsbeispiel beschränkt. Vielmehr sind eine Vielzahl von Varianten möglich, die auch bei abweichender Gestaltung von dem in den Ansprüchen angegebenen Erfindungsgedanken Gebrauch machen. So kann beispielsweise das als geschlossener Kragen 8 ausgeführte Klippelement auch mit einem oder mehreren Schlitzen versehen sein, die dann gleichmäßig über den Umfang der Öffnung verteilt angeordnet sein können.

## Patentansprüche

1. Befestigungselement (1) für Fahrzeugteile (5), insbesondere zur Befestigung eines Hitzeschildes an einem bolzenförmigen Befestigungsmittel (13) einer Karosserie, vorzugsweise einem Unterboden eines Kraftfahrzeugs,
- mit einer Krallenscheibe (2) und einer an Krallen (2.1) der Krallenscheibe gehaltenen Federscheibe (3),
- wobei die Krallenscheibe (2) eine Öffnung (6) aufweist und die Federscheibe (3) mit dem bolzenförmigen Befestigungsmittel (13) verrastbar ist,
**dadurch gekennzeichnet,**
- **dass** die Krallenscheibe (2) wenigstens ein der Öffnung (6) zugeordnetes und von der Federscheibe (3) weg gerichtetes Klippelement (8) aufweist,
- wobei das wenigstens eine Klippelement (8) zum Durchführen durch einen Durchbruch (7) in dem Fahrzeugteil (5) oder des Hitzeschildes ausgebildet ist und
- wobei das wenigstens eine Klippelement (8) eine Hinterschneidung (10) zum Verrasten mit dem Randbereich des Durchbruchs (7) des Fahrzeugteils (5) oder Hitzeschildes aufweist.

2. Befestigungselement nach Anspruch 1,
**dadurch gekennzeichnet,**
**dass** das wenigstens eine Klippelement (8) zwischen der Hinterschneidung (10) und dem freiem Ende als Distanzstück verlängert ist.

3. Befestigungselement nach Anspruch 1 oder 2,
**dadurch gekennzeichnet,**
**dass** das freie Ende des wenigstens einen Klippelements (8) gegenüber einem zur Anlage an dem Fahrzeugteil (5) oder Hitzeschild bestimmten Abschnitt der Krallenscheibe (2) um eine Länge vorsteht, die mindestens das zweifache der Dicke des verrasteten Randbereichs des Fahrzeugteils (5) oder Hitzeschildes beträgt.

4. Befestigungselement nach einem der Ansprüche 1 bis 3,
**dadurch gekennzeichnet,**
**dass** am freien Ende des wenigstens einen Klippelements (8) eine Anlagefläche (11) zur Anlage an die Karosserie (12) vorgesehen ist.

5. Befestigungselement nach einem der Ansprüche 1 bis 4,
**dadurch gekennzeichnet,**
- **dass** die Krallenscheibe (2) außerhalb der Öffnung (6) einen flächigen Abschnitt (4) zur Anlage an das Fahrzeugteil (5) aufweist und
- **dass** das wenigstens eine Klippelement (8) im Wesentlichen senkrecht zu der flächigen Anlage (4) nach außen absteht.

6. Befestigungselement nach einem der Ansprüche 1 bis 5,
**dadurch gekennzeichnet,**
**dass** das wenigstens eine Klippelement (8) als geschlossener oder im Wesentlichen geschlossener Kragen ausgebildet ist.

7. Befestigungselement nach Anspruch 6,
**dadurch gekennzeichnet,**
**dass** die Hinterschneidung (10) vollständig umlaufend am Kragen (8) vorgesehen ist.

8. Befestigungselement nach Anspruch 6 oder 7,
**dadurch gekennzeichnet,**
**dass** der Kragen (8) wenigstens einen die Hinterschneidung (10) bildenden Wulst (9) aufweist.

9. Befestigungselement nach einem der Ansprüche 1 bis 8,
**dadurch gekennzeichnet,**
**dass** die Krallenscheibe (2) aus Aluminium oder aus einem Aluminiummaterial gebildet ist.

10. Fahrzeugteil, insbesondere Hitzeschilde, mit mindestens einem Durchbruch (7) und einem in dem Durchbruch (7) verrasteten Befestigungselement (1) nach einem der Ansprüche 1 bis 9.

## Claims

1. A fastening element (1) for vehicle parts (5), in particular for fastening a heat shield to a bolt-shaped fastening means (13) of a bodywork, preferably to an underbody of a motor vehicle,
- with a claw washer (2) and with a spring washer (3) retained on claws (2.1) of said claw washer,
- said claw washer (2) comprising an opening (6) and the spring washer (3) being adapted to be connected to said bolt-shaped fastening means (13) by a click connection,
**characterized in**
- **that** said claw washer (2) comprises at least one clip element (8) associated with said opening (6) and turned away from said spring washer (3),
- the at least one clip element (8) being configured to be threaded through a perforation (7) in the vehicle part (5) or in the heat shield and
- the at least one clip element (8) comprising an undercut (10) for click connection to the border region of the perforation (7) of the vehicle part (5) or of the heat shield.

2. The fastening element as set forth in claim 1,
**characterized in**
**that** the at least one clip element (8) is lengthened as a spacer between the undercut (10) and the free end.

3. The fastening element as set forth in claim 1 or 2,
**characterized in**
**that** the free end of the at least one clip element (8) protrudes from a certain portion of the claw washer (2) intended to fit against the vehicle part (5) or the heat shield by a length that is at least twice the thickness of the click-connected border region of the vehicle part (5) or of the heat shield.

4. The fastening element as set forth in any one of the claims 1 through 3,
**characterized in**
**that** an abutment face (11) for abutment on the bodywork (12) is provided at the free end of the at least one click element (8).

5. The fastening element as set forth in any one of the claims 1 through 4,
**characterized in**
- **that** the claw washer (2) comprises a planar portion (4) for abutment on the vehicle part (5) outside the opening (6) and
- **that** the at least one clip element (8) protrudes outward, substantially at right angles with respect to the planar abutment (4).

6. The fastening element as set forth in any one of the claims 1 through 5,
**characterized in**
**that** the at least one clip element (8) is configured to be a closed or substantially closed collar.

7. The fastening element as set forth in claim 6,
**characterized in**
**that** the undercut (10) is provided to be completely circumferential on the collar (8).

8. The fastening element as set forth in claim 6 or 7,
**characterized in**
**that** the collar (8) comprises at least one bulge (9) forming the undercut (10).

9. The fastening element as set forth in any one of the claims 1 through 8,
**characterized in**
**that** the claw washer (2) is made from aluminum or from an aluminum material.

10. A vehicle part, in particular a heat shield, with at least one perforation (7) and with a fastening element (1) as set forth in any one of the claims 1 through 9 that is click-connected in said perforation (7).

## Revendications

1. Elément de fixation (1) destiné à des parties de véhicule (5), en particulier à la fixation d'un bouclier thermique sur un moyen de fixation (13) en forme de boulon d'une carrosserie, de préférence un dessous de caisse d'un véhicule automobile,
- comprenant un disque à griffes (2) et une rondelle-ressort (3) qui est maintenue sur des griffes (2.1) du disque à griffes,
- ledit disque à griffes (2) présentant une ouverture (6) et ladite rondelle-ressort (3) pouvant être enclenchée avec le moyen de fixation (13) en forme de boulon,
**caractérisé par le fait**
- **que** ledit disque à griffes (2) présente au moins un élément de clipsage (8) associé à ladite ouverture (6) et dirigé dans la direction opposée à la rondelle-ressort (3),
- ledit au moins un élément de clipsage (8) étant réalisé pour le faire passer à travers une percée (7) ménagée dans la partie de véhicule (5) ou du bouclier thermique, et
- ledit au moins un élément de clipsage (8) présentant une contre-dépouille (10) pour l'enclenchement avec la zone marginale de la percée (7) de la partie de véhicule (5) ou du bouclier thermique.

2. Elément de fixation selon la revendication 1, **caractérisé par le fait que** ledit au moins un élément de clipsage (8) est rallongé en tant que pièce d'écartement entre la contre-dépouille (10) et l'extrémité libre.

3. Elément de fixation selon la revendication 1 ou 2, **caractérisé par le fait que** l'extrémité libre dudit au moins un élément de clipsage (8) fait saillie d'une longueur par rapport à une portion du disque à griffes (2) destinée à venir en appui sur la partie de véhicule (5) ou sur le bouclier thermique, à savoir d'une longueur qui est égale à au moins deux fois l'épaisseur de la zone marginale enclenchée de la partie de véhicule (5) ou du bouclier thermique.

4. Elément de fixation selon l'une quelconque des revendications 1 à 3, **caractérisé par le fait qu'**à l'extrémité libre dudit au moins un élément de clipsage (8) est prévue une surface d'appui (11) destinée à venir en appui sur la carrosserie (12).

5. Elément de fixation selon l'une quelconque des revendications 1 à 4, **caractérisé par le fait**
- **que**, à l'extérieur de ladite ouverture (6), le disque à griffes (2) présente une portion plane (4) destinée à venir en appui sur la partie de véhicule (5), et
- **que** ledit au moins un élément de clipsage (8) fait saillie vers l'extérieur pour l'essentiel perpendiculairement à l'appui plan (4).

6. Elément de fixation selon l'une quelconque des revendications 1 à 5, **caractérisé par le fait que** ledit au moins un élément de clipsage (8) est réalisé en tant que collerette fermée ou pour l'essentiel fermée.

7. Elément de fixation selon la revendication 6, **caractérisé par le fait que** la contre-dépouille (10) est prévue sur la collerette (8) de manière à s'étendre tout autour.

8. Elément de fixation selon la revendication 6 ou 7, **caractérisé par le fait que** ladite collerette (8) présente au moins un bourrelet (9) formant la contre-dépouille (10).

9. Elément de fixation selon l'une quelconque des revendications 1 à 8, **caractérisé par le fait que** ledit disque à griffes (2) est réalisé en aluminium ou en un matériau d'aluminium.

10. Partie de véhicule, en particulier bouclier thermique, comprenant au moins une percée (7) et un élément de fixation (1) selon l'une quelconque des revendications 1 à 9, qui est enclenché dans ladite percée (7).
